Europäisches Patentamt

European Patent Office

Office européen des brevets

(19)

(11) Publication number: **0 083 383**
**A1**

(12) **EUROPEAN PATENT APPLICATION**

(21) Application number: **81306199.1**

(22) Date of filing: **31.12.81**

(51) Int. Cl.³: **B 05 C  15/00,** B 05 B  13/04,
B 05 B  12/00, B 05 D  1/02
// C03C17/22, C03C17/245

(43) Date of publication of application: **13.07.83**
**Bulletin 83/28**

(84) Designated Contracting States: **BE DE FR GB IT SE**

(71) Applicant: **PHOTON POWER INC., 10767 Gateway West,
El Paso Texas 79935 (US)**

(72) Inventor: **Lampkin, Curtis R., 3204 Dundee, El Paso
Texas 79925 (US)**

(74) Representative: **Warden, John Christopher et al, R.G.C.
Jenkins & Co. 12-15, Fetter Lane, London EC4A 1PL (GB)**

(54) **Process and apparatus for forming thin films on a moving substrate.**

(57)  A process and apparatus are provided for forming thin
films of selected materials on a hot moving substrate (50).
An atomized liquid is sprayed through a nozzle (64) in a
selected spray configuration, the spray being projected ver-
tically towards said hot substrate within a spray chamber
(12) having a minimum volume defined by an interior wall
configuration for reducing turbulence. A flow of ambient air
about the spray suppresses convection currents arising
from the substrate. Materials resulting from the spray are
exhausted from above the substrate.

- 1 -

# PROCESS AND APPARATUS FOR FORMING THIN FILMS ON A MOVING SUBSTRATE

This invention relates to thin film formation, and more particularly to improved methods and apparatus for forming thin films on vitreous substrates using a spray deposition process.

This invention relates also to methods and apparatus for forming high quality thin films, and more particularly, to method and apparatus for continuously moving a substrate through a plurality of heat zones controlled to establish a suitable substrate temperature.

Various technology related to forming thin films on substrate materials has been available for many years. However, recent product requirements have imposed demands which existing technology could not adequately satisfy. Ever increasing demand for high quality films, substantially free of pinhole-type defects, has occurred in the field of photovoltaics and of electrical display devices.

A major use of thin films in the prior art was coated glass for use in buildings. The coatings were applied to obtain a variety of colors for architectural purposes and for screening incident radiation. Such coatings required a degree of optical clarity and freedom from interference rings, but did not require a high degree of perfection with respect to pinhole defects. Electrically conductive coatings were applied to transparent substrates for some applications, e.g., cockpit windows in airplanes to provide for passing an electrical current for heating the window, where additives could be used to obtain the desired film characteristics, such as light transmission and electrical conductivity.

Recent developments in photovoltaics and in electrical displays have produced requirements for quantities of high quality films heretofore produced only for low volume speciality applications. These requirements are for thin films up to 4 microns in thickness formed on vitreous substrates, such as glass. Extremely thin films are required for optical purposes as well as for conservation of scarce materials.

The ability to form high quality thin films from a spray deposition process is being sought for volume production of such films useful in solar energy conversion devices and in transparent electrically conductive vitreous substrates, among many other applications. In these applications a high quality film generally means a film having only that thickness required to obtain the desired electrical or photovoltaic effect, the film properties being substantially uniform over the entire surface area of the filmed substrate.

Transparent vitreous substrates, such as glass, may be coated with electrically conductive films for use in a variety of applications.   The electrically conductive film can be used as a resistor-type element in order to produce a heated surface when electrical current is passed through the film for use in maintaining an ice-free surface, such as an aircraft windshield.   Yet another use for a transparent substrate having a continuous coating of electrically conductive material is to provide a surface which is highly reflective for infrared radiation.   Such a surface could then be a heat control device, keeping incident infrared radiation from entering an enclosed space or keeping radiated infrared waves from leaving an enclosed space.

In yet another application, transparent electrically conductive films may be formed in a conductive pattern on a transparent substrate for use in electronic display devices.   Electronic display devices, such as liquid crystal devices, require that an electrical field be produced over a medium which has visibility characteristics which are alterable by an electrical field. Such devices, however, require that the resulting display be viewable through at least one of the electrically conductive patterns, thus necessitating a transparent electrically conductive pattern.   High quality films are required to maintain a high degree of pattern resolution, optical clarity, and freedom from annoying interference patterns.

A further use for high quality thin films is in a photovoltaic cell, and more particularly, a photovoltaic cell, forming a cadmium sulfide (CdS)-type material over a transparent electrically conductive substrate, such as tin oxide ($SnO_x$). Where the photovoltaic cells are arranged in a 'backwall' configuration on a transparent vitreous substrate, incident irradiation must pass through the $SnO_x$ and CdS layers in order to reach the heterojunction where the photovoltaic conversion occurs. Thus, minimum thickness films with a high degree of light transmission are required in order to maximize the light which reaches the heterojunction. A high degree of film uniformity is also required in these applications in order to prevent pinhole defects where an overlaying layer may penetrate an underlying layer to produce various deleterious effects.

In the prior art, such thin films have been formed by various techniques, including vacuum evaporation and deposition, vapor deposition, high frequency sputtering, and liquid sprays onto a heated substrate. The present application concerns only the application of liquid sprays onto a heated substrate, and more particularly, a substrate which is heated throughout the spray process.

The prior art is replete with attempts to obtain high quality film deposition using spray techniques.

- 5 -

Spraying offers the potential of providing a high volume, low cost process which may be readily adapted to quantity production. However, spray application can produce a number of difficulties with respect to forming high quality films.

High quality film formation generally occurs when the sprayed materials maintain relatively similar time-temperature histories. Sprayed materials which reach the surface or a position adjacent the surface, which are relatively longer in transit, or which are deposited adjacent surface portions with relatively different temperatures form films having quite different characteristics than desired. Thus, it would be desirable to provide film-forming material adjacent the surface with controlled time-temperature histories and to confine deposition of that material to selected portions of the heated substrate.

One such attempt in the prior art is described in U.S. Patent Application S/N 886,891 wherein the spray nozzle is tilted with respect to the vertical to confine the sprayed solution to a selected portion of the substrate and wherein various baffles are provided to shield the substrate in regions where the substrate temperature was not sufficiently controlled or where the accumulated time-temperature history of the particles produced unacceptable films.    Thus, only a portion of the spray was selected for deposition on the surface.

Yet another technique is to provide exhaust ducts adjacent the spray nozzles for removing reaction products above the surface.    Such a device, by way of example, is depicted in U.S. Patent No. 3,887,349 for forming metallic oxide coatings on a glass surface. Another approach disclosed in U.S. Patent No. 4,125,391 is to project the spray at a relatively low angle of incidence with respect to the surface in the direction of substrate movement.    Exhaust ducts are provided downstream from the spray to collect reaction products, but without affecting the spray prior to the spray impinging on the surface.

The prior art devices do attempt to remove reaction products from above the glass surface.    There is, however, generally no control of the time-temperature history of the droplets other than gross removal afforded by the exhaust system.    Thus, metallic oxide films are produced which are satisfactory for window glass, but are not satisfactory for high quality transparent electrically conductive films.    Yet another prior art technique discussed in U.S. Patent No. 3,880,633, is to produce a spray composed of uniformly sized drops. However, such a system is very difficult to obtain with an air atomized spray system.    Even with uniform droplet sizes, a time-temperature history control is still desirable to maintain a product of uniform quality.

A major contributor to producing high quality films from a spray deposition process is the capability of uniformly heating the transparent vitreous substrate throughout the film-forming operation to minimize temperature gradients over the substrate surface wherein uniform film-forming characteristics may be maintained.    U.S. Patent No. 4,224,355, issued to Lampkin et al. on September 23, 1980 which disclosure is incorporated herein by reference, discusses method and apparatus in the prior art for use in heating substrates during film-forming operations.    The subject U.S. Patent further teaches improved techniques for heating a substrate where radiant heaters are selectively energized to produce a radiant energy input distribution adjacent the substrate approximating the heat loss energy distribution during the film-forming process.    The method and apparatus described therein produce high quality films of $SnO_x$ and Cds having uniform qualities not theretofore available from spray deposition processes.

However, the method and apparatus taught by U.S. Patent No. 4,224,355 obtained some operational problems.    The apparatus for conveying a transparent vitreous substrate provided a screw conveyor and a series of trolleys, each trolley supporting a substrate for

movement through the system. Such trolleys are subject to mechanical problems and intermittent jamming of the conveying system occurred. Further, considerable handling of the substrate was required with the trolley system. In addition, the trolley system introduced a considerable mass of a metallic material about the periphery of the glass which affected the system capability to maintain uniform substrate temperatures.

Further, the temperature control system discussed therein provided thermocouples generally attempting to sense the temperature of the substrate surface. Although operational control could be obtained from the thermocouples, calibration of the system was difficult and changing system conditions from age, spray accumulation and the like made accurate temperature control maintenance difficult.

The disadvantages of the prior art are overcome by the present invention, however, and improved methods and apparatus for forming thin films by a spray deposition process are provided while continuously conveying and heating a substrate.

The present invention provides in one aspect apparatus for forming thin films of selected materials on a hot moving substrate; comprising:

a spray nozzle adapted for forming a selected spray configuration;

a spray chamber having a minimum volume defined by an interior wall configuration for reducing turbulence within said spray chamber;

means for introudcing atmospheric flow through said spray chamber in an amount effective to suppress convection currents above said hot substrate;

exhaust ducting extending transverse to movement of said substrate for receiving said atmospheric flow.

In another aspect the invention provides a process for forming thin films of selected materials on a hot moving substrate, comprising the steps of:

forming from an atomized liquid a selected spray configuration;

projecting said spray vertically toward said hot substrate within a spray chamber having a minimum volume for reducing turbulence;

introducing ambient air flow about said spray to suppress convection air currents arising from said substrate; and

exhausting materials resulting from said spray from above said substrate.

By means of the invention, at least in preferred embodiments, improved method and apparatus are provided for forming high quality thin films of selected materials by spraying selected solutions toward a hot moving substrate. A contoured spray booth provides a minimum volume within which the spray is projected wherein spray-induced turbulence is greatly reduced or terminated. Ambient air introduction is provided for suppressing convection currents which may arise from the hot substrate. The overall reduction in internal spray booth turbulence produces a major improvement in film quality.

A spray nozzle design is selected which permits control of the spray 'footprint' incident on the hot substrate. A projected atomized liquid is formed to the selected spray configuration by directing spray cones of air about the atomized liquid. In one embodiment, it is desired to substantially eliminate flow of the atomized liquid transverse to movement of the substrate and an air projection angle is selected which forms a substantially vertical air curtain. In another embodiment, a fan shaped spray configuration is obtained by projecting the air spray cones directly toward the atomized liquid. By selecting the longitudinal axis of the fan to be parallel with substrate movement, an increased volumetric rate of spray may be obtained without greatly increasing the unit heat loading on the substrate. By controlling movement of the spray along the substrate, improved uniformity of conditions for film formation is obtained.

Dwell time of the sprayed material adjacent the hot substrate is controlled by controlling the velocity of airflow within the spray chamber and adjacent the substrate. In a gas phase reaction, a roof section is provided for increasing spray deposition efficiency wherein airflow velocity beneath the roof is greatly reduced by removing air from within the spray chamber at a location along the spray chamber walls. In another embodiment, high quality films are formed within a short distance about the spray footprint on the substrate surface and a relatively high air velocity is maintained for removing materials which do not promptly react on the surface or which form reaction products from such a reaction. Spray chamber walls terminate adjacent the exhaust duct entrance and full velocity is maintained about the spray.

An exhaust duct system is designed to maintain substantially uniform atmospheric flow across the width of the moving substrate to minimize non-uniform film deposition. Exhaust uniformity is maintained over a variety of airflow and temperature conditions.

Various portions of the spray booth are separately removable to enhance cleanability without affecting substrate filming operations. An exhaust entrance assembly is easily removable from the spray booth to provide frequent cleaning where spray residue and reaction products condense as the airflow is accelerated from above the substrate and into the exhaust ducts. The exhaust ducts are separately removable from the spray booth and may be broken apart for interior cleaning. Lip portions overlie interior wall portions of the spray chamber where abrupt acceleration of air and spray products occur. Where a roof section is provided, the roof section is separately removable from the spray booth for cleaning. Thus, those portions of the spray booth which are in direct contact with the spray or with reaction products and where such materials are expected to accumulate are readily removable for cleaning.

The spray booth employing a substantially vertical air curtain, intermediate air slot, and roof section is particularly suitable for forming transparent and highly conductive films of $SnO_x$ on a glass substrate where substantial uniformity and optical clarity are maintained while low electrical resistivities are achieved without the use of dopants. The spray booth employing a fan shaped spray and maintaining a large atmospheric velocity for removing unreacted spray components and reaction products produces thin films of CdS with substantial freedom from pinhole defects and over large area substrates for use in producing photovoltaic panels on a production scale.

An improved conveyor assembly is provided for transporting a transparent vitreous substrate along a group of controlled radiative heaters. A plurality of control groups are formed from the radiative heaters and the illumination for the various control groups is isolated so that areas of the conveyor or substrate are illuminated by only a single control group at any one time. The control group isolation permits effective control of the heaters to obtain a thermal input profile effective to maintain the substrate temperature at preselected temperature ranges as a function of substrate location within the heated conveyor.

In a preferred embodiment of the heated conveyor system, heater control thermocouples are fixed to the radiative heater elements and the output signals from the control thermocouples are calibrated from a calibration thermocouple extending to a position between the control thermocouple and the substrate surface. A wire mesh belt assembly permits illumination of the substrate through the conveyor assembly while supporting the substrate in a manner effective to obtain uniform heating of the substrate.  Close control of the gaps between the substrate edges and facing portions of the mesh support system is maintained.  Maintenance of the tolerances is obtained by using a chain-type system for moving the wire mesh supports and configuring the end drum assemblies to accommodate the difference in radius of travel for the mesh and the supports about the end drums.

A process for heating a transparent vitreous substrate on a continuous conveyor is provided by illuminating a given point on the substrate surface from only a single controlled heater group at any one time. Isolation of thermal inputs is obtained for effective control.  In a preferred embodiment, the substrate is conveyed while being supported substantially only along leading and trailing edge portions, wherein a substrate surface may be illuminated through the conveyor. Control of the power input to the radiative heater control groups is obtained by monitoring the temperature of at least one radiative heater within each control group and comparing the temperature signal with a temperature set point signal.  The temperature set point signal may conveniently be obtained using a calibration thermocouple for use in adjusting the heater power inputs until the outputs from the control thermocouple and the calibration thermocouple satisfy a preselected relationship indicating the substrate surface temperature is within a selected range.

It is a feature of the present invention to provide a continuous conveyor system having a plurality of controlled heater inputs for minimizing temperature gradients in the substrate transverse to the direction of substrate movement while providing thermal gradients along the direction of substrate travel to maintain the substrate temperature within preselected limits.

It is another feature of the present invention to permit radiant heating of the substrate from beneath the conveyor assembly.

It is yet another feature of the present invention to maintain the gaps between the edges of the substrate and facing portions of the conveyor support system within preselected tolerances during the conveying cycle.

One other feature of the present invention is to provide a continuous mesh belt assembly for supporting the substrate only along leading and trailing edge portions.

A feature of the present invention is to adhere the control thermocouple to a radiant heater.

Another feature of the present invention is to provide a calibration thermocouple at a location between the control thermocouple and the substrate surface and a predetermined relationship between outputs from the control thermocouple and the calibration thermocouple with the substrate temperature wherein a control set point can be obtained for the control thermocouple output.

Preferred embodiments of the invention will now be described with reference to the accompanying drawings wherein:

Figure 1 is a simplified pictorial illustration of a spray booth embodying various concepts of the present invention.

Figure 2 is a pictorial top view of a suitable spray nozzle traverse mechanism.

Figure 3 is a pictorial end view of a suitable spray nozzle traverse mechanism.

Figure 4A is a schematic cross section of a spray booth suitable for forming tin oxide.

Figure 4B is a schematic cross section of a spray booth suitable for forming cadmium sulfide.

Figure 5A is a cross section of an air cap for a tin oxide spray nozzle.

Figure 5B is a cross section of a spray nozzle air cap for cadmium sulfide.

Figure 6 is a schematic cross section of a heated conveyor system according to the present invention.

Figure 7 is an isometric view in partial cut-away, illustrating component features of a heated conveyor system.

Figure 8 is an isometric illustration of a conveyor belt construction.

Figure 9 is an isometric illustration of a conveyor belt guide.

Figure 10 is a schematic cross section of a conveyor drive drum.

Figure 11 is a block diagram of a temperature control system.

Figure 12 is a temperature control flow diagram.

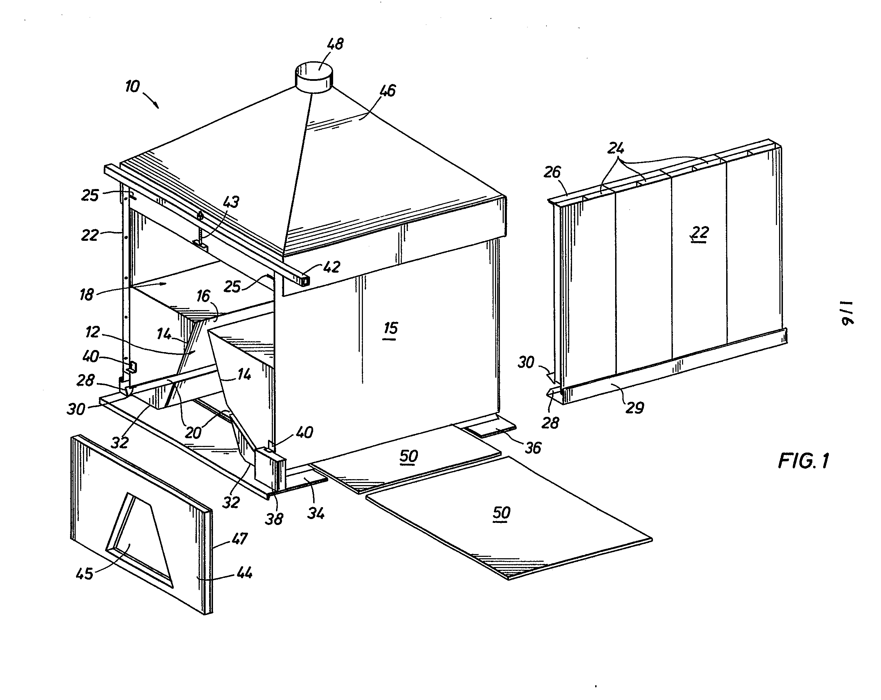

Referring now to Figure 1, there is depicted a pictorial illustration of a spray booth embodying many of the concepts of the present invention. Spray booth assembly 10 is provided generally incorporating spray chamber 12 defined by interior walls 14 and booth exterior walls 15. A spray entrance slot 16 is provided between adjacent interior wall portions 14 and beneath nozzle traverse space 18. Removable exhaust assemblies 22 are provided on the upstream and downstream portions of spray booth assembly 10. The exhaust hood 46 collects material from ducts 22 for delivery to the external exhaust duct 48. Insulated side walls 44 are provided as hereinafter described.

Spray booth assembly 10 is generally located over a heated conveyor line (not shown) conveying substrate materials through spray booth 10. Spray booth 10 is particularly suited for use in spray depositing film forming materials on a heated substrate where the substrate is continuously heated through the spraying process. As herein described, glass sheets 50 are particularly suited for the film forming operations.

The particular heating and conveying system chosen for substrate 50 is not particularly critical to operation of spray booth 10 described herein. However, the best results are obtained where a heat input profile is generally matched to the heat loss profile within the spray booth 10 and where the exposed surface of substrate 50 is even with, or slightly above, any surface of the conveying mechanism. It is also desirable that the spacing between a leading or trailing edge of substrate 50 and an adjacent facing portion of the conveying system or an adjacent sheet of substrate 50 be maintained at 1/8" or less. This spacing assists in keeping the various chemical reactions adjacent the surface at the leading and trailing edges.

Spray booth exterior 15 is provided with support angles 40 which rest on support blocks 38 for holding booth assembly 10 above substrate 50.   Support blocks 38 may be provided in a variety of sizes to insure a uniform controlled clearance of booth assembly 10 above substrate 50.   Support blocks 38 may be provided with a resilient backing, such as a sheet of foam silicone, which is heat resistant and seals adjacent air passages from the booth 10 exterior environment.   Booth exterior 15 may also be provided with an attachment mechanism 43 connecting with supporting beam 42.   Support beam 42 may conveniently interconnect adjacent booths on an assembly line for enabling removal of support blocks 38 while maintaining booth assembly 10 in position. Attachment means 43 may conveniently be a threaded nut assembly for adjusting the elevation of booth assembly 10 onto support blocks 38.

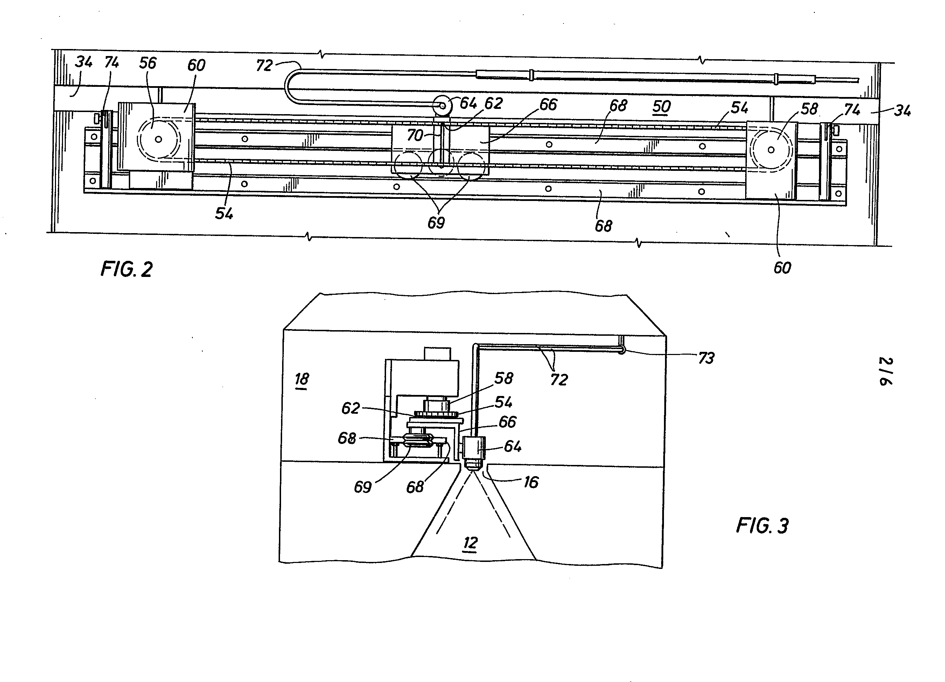

Spray chamber 12 is defined by interior wall portions 14.   Wall portions 14 are separated at the upper end by spray nozzle entrance slot 16 for admitting an incident spray, as hereinafter described.   At least the upper portions of interior walls 14 may be insulated to maintain space 18 containing the spray traverse mechanism (Figures 2 and 3) at generally ambient conditions. Traverse mechanism space 18 is generally open at both ends for establishing atmospheric flow therethrough. This atmospheric flow may be created by an external exhaust fan which causes air to enter spray chamber 12 through spray entrance slot 16.

Spray chamber 12, as defined by interior walls 14, forms a minimum volume region for accommodating the configuration of the incident spray. The minimum volume configuration is an important feature of the present spray booth and assists in suppressing internal convection currents and spray turbulence.

Airflow control slots 20 may be provided where the flow which is introduced through spray entrance slot 16 is selected to be the amount needed to suppress internal convection currents but is in excess of the amount desired to promote film formation adjacent substrate 50. Airflow control slots 20 permit a portion of the incoming airflow to be removed above substrate 50 and returned to exhaust assembly 22.

The bottom portion of spray chamber 12 is configured to facilitate the particular chemical reaction forming the desired film on substrate 50. As depicted in Figure 1, a roof assembly 32 is provided which is a suitable configuration where the film is formed from a gas phase reaction such as occurs in forming electrically conductive films of tin oxide ($SnO_x$). In other reactions, such as forming polycrystalline films of cadmium sulfide (CdS), roof assembly 32 would be undesirable since it is desired to remove the gaseous and spray products from above the surface after a certain minimum time.

Spray booth assembly 10 is generally wider than substrate 50. This increased width generally accommodates the width of the heaters in the heater section beneath substrate 50, but also accommodates end pans 34 and 36 on either side of substrate 50. As hereinafter discussed, spray nozzle movement is non-linear at the ends of the traverse over substrate 50. If this non-linearity occurred totally over substrate 50, a non-uniform film would be produced. Consequently, end pans 34 and 36 provide a region removed from substrate 50 for receiving at least part of the incident spray when the direction of travel of the spray nozzle can be reversed. The liquid flow through the spray nozzle may be shut off during the reverse cycle while atomizing airflow continues to prevent clogging of the nozzle. However, it is possible to continue normal spray operations throughout the cycle maintained. wherein the spray configurations hereinbelow described are

End panels 44 are provided at either side of spray booth assembly 10, covering the ends of spray chamber 12. End panel 44 is generally insulated to maintain the exterior portion at safe temperatures. End panel 44 also functions to seal the adjacent internal air passages of booth 10. Sealing material 47, which may be a temperature resistant material such as sheet foam silicone, is provided for abutting and sealing spray chamber 12, roof area 32, and air flow control slot 20. A view port 45 may conveniently be provided for observing the spray conditions and substrate 50 integrity within spray chamber 12.

Figure 1 also shows removable exhaust ducts 22. The removability feature greatly improves the serviceability of the spray booth. Each exhaust assembly 22 generally includes exhaust lip 28 which acts to divert airflow from above substrate 50 into exhaust ducts 24. An angled surface may be provided for exhaust lip 28 to enhance this flow removal. Where airflow control slot 20 is provided, an air slot exhaust lip 30 may also be provided to facilitate booth cleaning.

Exhaust lips 30 and 28 are provided in regions where acceleration and cooling of the spray components are occurring and where spray deposition of residue of reaction products and undeposited spray materials is expected to occur within spray booth assembly 10. Exhaust lip 30 is removable with exhaust ducts 22 for cleaning. Exhaust lip 28 is formed on exhaust entrance assembly 29. It is expected that maximum residue will accumulate on assembly 29, and assembly 29 is conveniently removable separate from exhaust assembly 22 to provide for frequent cleaning.

Exhaust assembly 22 may be provided with a plurality of exhaust ducts 24. Providing a plurality of separate ducts 24 provides internal spacers to prevent temperature induced warping of exhaust ducts 22 and permits the flow areas forming the various exhaust ducts 24 to be varied, if necessary, to ensure uniform exhaust flow across the surface of substrate 50. Uniform exhaust flow is desirable to promote temperature uniformity of the substrate 50 and uniform distribution of film-forming materials to the surface of substrate 50.

Spray booth exterior assembly 15 may conveniently include support slot 25 which accepts exhaust assembly support lip 26. Support lip 26 engages slot 25 to facilitate removal and replacement of exhaust duct 22 on the spray booth exterior 15.

During operation of spray booth assembly 10, exhaust assemblies 22 may be quickly replaced. It is desirable that the replacement affect only a single substrate 50 within spray booth assembly 10. It is believed that exhaust assemblies 22 and exhaust entrance assemblies 29 will require cleaning relatively frequently compared with other portions of the spray booth and hence the design facilitates removal of exhaust assemblies 22 and exhaust entrance assemblies 29 for cleaning.

When it is desired to clean the entire spray booth assembly 10, support attachments 43 may be adjusted to raise the elevation of spray booth 10 above support blocks 38 wherein support blocks 38 may be removed. If desired, a cover sheet assembly (not shown) may then be inserted beneath spray booth assembly 10 and over substrate 50 during booth removal. Removal is completed by disengaging attachment 43 from support beam 42, removing portions of external exhaust ducting 48, and removing booth assembly from above the conveyor line 50. Cleaning may be accomplished by a variety of techniques, such as washing, sandblasting, brushing, or ultrasonic cleaning.

Referring now to Figures 2 and 3, there are depicted pictorial top and end views illustrating a spray nozzle traverse mechanism in accordance with a preferred embodiment of the present invention. The traverse mechanism is located in the space 18 provided in spray booth assembly 10 in order to maintain the components substantially at ambient temperature. Chain 54 is mounted on drive sprockets 56 and 58 for continuous rotation within space 18. Although a variety of chain designs may be used, a preferred embodiment uses a stainless steel wire coated with polyurethane to form a chain which operates without lubrication. Sprocket 56 is driven by drive motor and gear box assembly 60, many varieties of which are commercially available.   An electrical cable assembly (not shown) connects drive motor and gear box assembly 60 to an available power supply.

Spray nozzle 64 is mounted on nozzle support 66 and is interconnected with a plurality of material supply lines 72 for receiving pressurized air and solutions of a material to be sprayed.   Supply lines 72 are sized to accommodate the traverse distance and are preferably flexible lines for accommodating such movement.   Supply lines 72 are supported by support tube 73 and connected to external material sources (not shown).   Typically, at least one supply line 72 is provided with an atomizing gas, generally air, from a pressure regulated source.   Another supply line 72 is provided with a solution of chemicals which react to form the desired film and is provided from a pressurized external tank and to a variety of flow controllers.   Such apparatus is conventional and is not depicted herein.

Nozzle support 66 may be mounted on traverse support 68 mounted within spray booth assembly 10. Traverse support 68 is provided to maintain alignment of nozzle 64 throughout the traverse.   Nozzel support 66 further includes guide slot forming means 70 which may be defined by an indentation in nozzle support 66 or by projections from nozzle support 66.

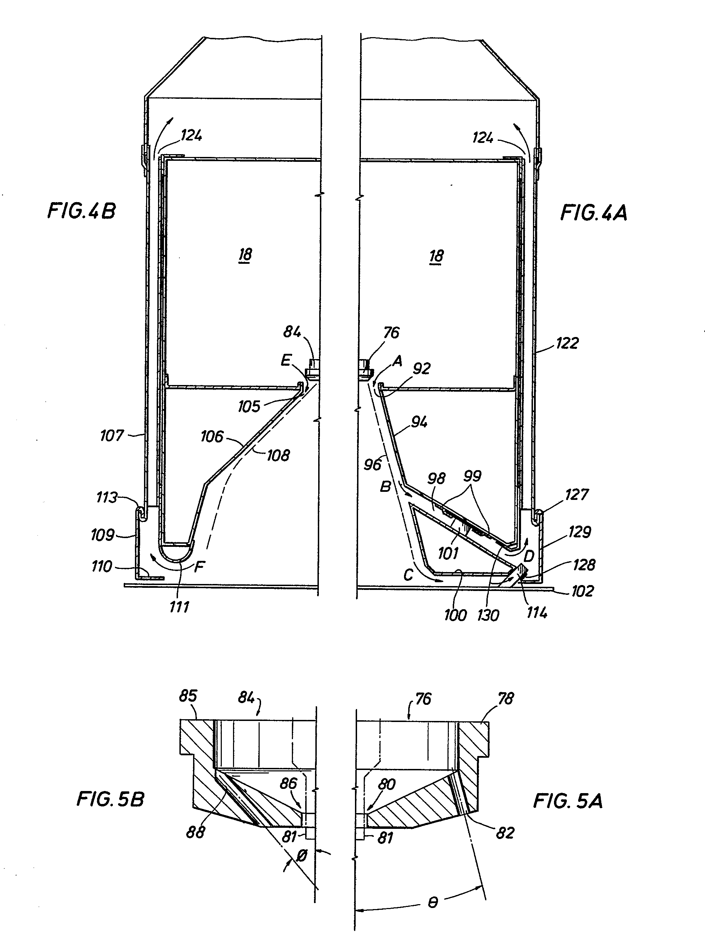

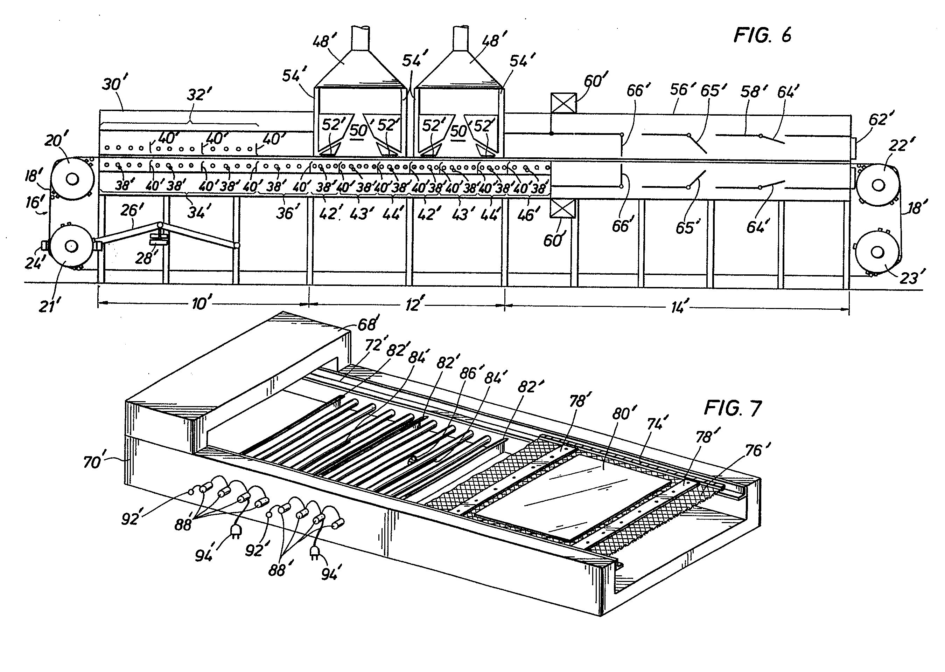

Nozzle 64 depends downward from nozzle support 66 and projects through entrance slot 16 (see Figure 1) for projecting a spray into the spray chamber 12. It is preferable for the nozzle 64 air cap tip (see Figures 5 and 6) to extend a small distance into spray chamber 12 through entrance slot 16 (see Figure 1).

Chain 54 is provided with drive pin 62 for reciprocating nozzle support 66 within traverse space 18. As pin 62 engages either of sprockets 58 or 54, the pin moves within slot 70, thereby maintaining engagement with slot 70 throughout the rotation of pin 62, causing reciprocation of nozzle support 66. As drive pin 62 engages sprocket 58 or 54, nozzle support 66 begins to accelerate for the traverse in the opposite direction. The forces required for this acceleration may be substantial and can lead to deformation or breakage of drive pin 62.

Accordingly, energy storing mechanisms 74 may be provided at each end of the traverse to store the energy of nozzle support 66 during deceleration and return the energy during a subsequent acceleration. A resilient member, such as spring steel, may be provided for mechanism 74. Thus, as drive pin 62 engages sprocket 58 or 54, nozzle support 66 engages spring member 74 and begins to deflect spring member 74. Once drive pin 62 passes the maximum point of traverse and begins to return in the opposite direction, spring member 74 returns to its initial position, returning the stored energy to nozzle support 66. Acceleration forces are thus provided by spring member 74 rather than drive pin 62.

Typically, the linear portion of the traverse is located over substrate 50 and the reversing portion occurs at least partially over end pans 34 and 36. In a typical installation, nozzle 64 is located about 10 inches above the upper surface of substrate 50. End pans 34 and 36 are generally at the same elevation as the upper surface of substrate 50. The clearance between the edge of end pans 34 and 36 and the edge of substrate 50 is preferably minimized and less than 1/8 inch to prevent air currents around the edges of substrate 50 from moving the chemical reaction away from the surface of substrate 50.

Referring now to Figures 4A and 4B, there is depicted in schematic form cross-sectional views of spray booth assemblies for forming thin films of tin oxide ($SnO_x$) and cadmium sulfide (CdS), respectively. The subject booth assemblies illustrate application of the above booth design principles to specific film forming operations.

Referring first to Figure 4A, there is shown a spray booth effective in forming high quality films produced from a gas phase reaction, such as a film of transparent highly conductive tin oxide ($SnO_x$). Air cap 76 of the spray nozzle is located adjacent convection current suppression slot 92 to direct spray 96 downwardly toward the substrate surface. The chemical reactions herein described occur on the surface of a heated substrate. For $SnO_x$, the substrate is generally heated to a temperature in the range of 460-500° C. The temperature difference between the surface of the substrate and spray traversing space 18 can give rise to thermal convection currents in the spray chamber defined by interior walls 94. The exhaust system hereinabove described is adjusted to admit sufficient air through slot 92 to suppress these convection currents.

In addition to convection currents, the atomized spray 96 itself could act to establish differential pressure zones within a spray volume. Accordingly, an important feature of the subject spray booth design is to maintain the spray chamber volume defined by walls 94 to the minimum volume required to accommodate the selected spray 96 configuration. Thus, walls 94 cooperate with the spray defined by air cap 76 wherein the spray configuration conforms as closely as possible to the interior wall 94 design.

In a gas phase reaction, such as occurs in $SnO_x$ formation, it is desirable to maintain the spray in close proximity to the surface of substrate 102 for vapor formation and reaction to occur. This requirement may not be met if the full convection current suppression air flow must pass between roof area 100 and the surface of substrate 102. Accordingly, air flow control slots 98 are provided which permit a portion of the suppression air flow to be exhausted above roof portion 100. Laminar air flow along the interior walls 94 permits this to be done without affecting spray cone 96.

For $SnO_x$ formation, spray configuration 96 is preferably formed by the air cap depicted in Figure 5A. When a normal atomizing air cap is used, a cone of spray is formed which flows generally uniformly in all directions upon impact with a substrate surface. That portion of the flow which carries the spray beneath roof area 100 forms high quality $SnO_x$. That portion of the spray which is generally transverse to movement of the substrate forms $SnO_x$ with undesirable characteristics, e.g., high resistance and hazy.

Air cap 76 is preferably provided for forming the $SnO_x$ spray configuration 96. Air cap body 78 defines central outlet 80 and side outlets 82. Side outlets 82 are aligned transverse to the movement of the substrate and are preferably oriented at an angle of about $\theta = 16°$ with respect to central outlet 80. Side outlets 82 provide air cones which force the liquid spray to flow beneath roof area 100 rather than transversely across an underlying substrate. The projection angle $\theta$ for outlet 82 is selected to approximate the spray cone angle so that a substantially vertical air curtain is formed. Spray configuration 96 (Figure 3) is, thus, generally cone shaped in the direction promoting the flow of sprayed material beneath roof portions 100 and is suppressed in a direction generally transverse to the movement of a substrate passing through the spray chamber.

The spray arriving beneath roof area 100 forms a vapor above a heated substrate which, in one embodiment, reacts to form a film of $SnO_x$ on the exposed surface of the substrate. Reaction products and unreacted materials are moved across the substrate surface and into exhaust ducts 124 for delivery to the external exhaust piping and filter systems. Exhaust lip 128 is provided to assist in diverting the incident air flow from above the surface of the substrate and into exhaust ducts 124. An upwardly projecting portion of exhaust lip 128 assists in obtaining a smooth flow of air from above the surface of substrate 102 to minimize uncontrolled and turbulent flow conditions.

0083383

- 31 -

Referring now to Figure 4B, there is depicted a spray booth suitable for forming a thin film on a heated substrate from a liquid phase reaction. Air cap 84 is provided within convection current suppression slot 105 for forming spray configuration 108. In a liquid phase reaction, a wide spray is desirable to reduce the unit area heat loading induced by the liquid drops reaching the surface prior to the chemical reaction occurring. Again, sufficient air is introduced through convection current suppression slot 105 to partially suppress thermal currents which could act to maintain spray droplets in suspension. Interior walls 106 are now configured to the fan shaped spray 108. A roof portion is not required in a liquid phase reaction and, in fact, it is desirable to remove reaction products and unreacted products from above the surface as soon as possible. Accordingly, interior walls 106 terminate at the entrance to exhaust ducts 124.

The fan spray configuration 108, which is especially suitable for CdS film formation, may be formed by air cap 84 depicted in Figure 5B. Air cap 84 has body portion 85 which defines central air outlet 86 for atomizing the sprayed liquid. Outlet 88 injects air against the emerging stream from fluid outlet 81 to form a fan-like spray configuration, i.e., a spray configuration having a narrow uniform width in relation to the

BAD ORIGINAL

longitudinal axis of the spray. The resulting spray envelope 108 is oriented with the longitudinal axis parallel to the direction of substrate movement. The narrow width of the spray reduces the spray dwell time over substrate area portions so that a given quantity of sprayed material can react completely prior to adding additional materials. It is expected that the fan shaped spray will significantly increase the film-forming capability of a single booth by permitting larger volumes of solution to be sprayed.

Fan-forming air outlet 88 is directed toward the spray cone formed by atomizing outlet 86 at an angle $\emptyset$, which may be the maximum angle permitted by air cap body 85. The resulting spray envelope 108 (Figure 4B) is the desired fan shape. The air curtains thus formed act to drive the sprayed particles onto the surface of the substrate where the desired reaction can occur.

Again, exhaust lip 110 is provided for smoothly moving the air flow into exhaust entrance assembly 109. Airflow control slots are not necessary in the CdS spray booth since it is desired to quickly remove reaction products and reacted spray from above the surface of the substrate and into exhaust system 124.

It should be noted that air caps 76 and 84 depicted in Figures 5A and 5B, respectively, are generally modified designs of commercially available air caps. Air cap 76 is formed by drilling air holes 82 to a diameter of 0.031 inches at an angle of 16° from the vertical through air cap body 78. Atomizing air opening 80 is preferably 0.064 inches in diameter. Air cap 84 may be formed by providing 0.040 inch diameter air slots at an angle $\emptyset=41°$ in air cap body 85 having an atomizing opening 86.

Air caps 76 and 84 are preferably formed from corrosion and erosion resistant materials, such as titanium or 316 stainless steel. It has been found desirable to institute certain quality checks on commercial nozzles to ensure that the incipient spray cones are reasonably uniform prior to being shaped by air outlets 82 and 88, Figures 5A and 5B. The concentricity of liquid tip 81 within atomizing opening 80 and 86 is at least visually checked. At least some air passage 80 and 86 should be present around the entire periphery of liquid tip 81. It has also been found desirable for liquid tip 81 to project slightly below air cap bodies 76 and 85 to minimize spray residue buildup about the periphery of atomizing openings 80 and 86.

An important feature herein is the control of air flow within the spray chamber and adjacent the film-forming surface. Referring first to Figure 4A, an air flow control scheme is depicted which is suitable for gas phase reactions forming high quality films such as $SnO_x$. An exhaust fan (not shown) connects with exhaust ducts 124 to induce air flow A through nozzle slot 92. Air flow A is selected to suppress convection currents induced by a heated substrate. However, it is desirable for air flow C beneath roof 100 to be only the air flow required to remove reaction products from the volume beneath roof 100.

Air flow control slot 98 is provided to divert air flow B from above roof 100. The relative amounts of air flow B and C may be varied by adjusting the proximity of exhaust lip 128 to the edge of roof area 100. This proximity adjustment may conveniently be done by spacer elements 114 on the end pans located on the sides of the spray booth assembly (pans 34 and 36 in Figure 1).

An ancillary advantage of the preferred embodiment is obtained by mixing the relatively cool diverted air flow B with the heated air flow C from roof area 100.

At the mixing region D, substantial deposition of reaction products and unreacted spray is expected to occur on exhaust entrance assembly 129. This local deposition should act to reduce the frequency for cleaning the spray system internal components to increase the system duty cycle.

Referring to Figure 4B, there is depicted an air flow control system for forming films such as CdS from liquid phase reactions. In this instance the desired reaction occurs within close proximity to the projected spray footprint. Thus, it is desirable to remove sprayed material outside of the desired reaction zone. This is obtained by maintaining full air flow through the spray chamber to exhaust flow F.

An exhaust system (not shown) provides sufficient air flow E through nozzle slot 105 to suppress convection currents. Air flow F is controlled by exit lip 111 to maintain a minimum volume spray chamber without impeding air flow through exhaust system 124. Reaction products and undeposited spray materials are promptly removed from the spray chamber.

Another important feature of the present apparatus is ability to remove spray booth components for cleaning. In a continuous production facility, spray booth cleaning is desirably carried out with minimum effects on the overall film-forming operations. Thus, the spray booths are designed to facilitate removal and replacement of components which require frequent cleaning.

Figures 4A and 4B illustrate various cleanability features. Exhaust entrance assemblies 129 and 109 are expected to accumulate considerable condensate from the spray materials and from reaction products of the film forming process. These exhaust entrance assemblies 129 and 109 are attached to exhaust assemblies 122 and 107 via slidable mountings 127 and 113 and can be removed for cleaning without affecting more than a single substrate.

Other areas of the spray booth are also in direct contact with portions of the spray and will accumulate residue, but at a lesser rate than exhaust entrance assemblies 129 and 109. Thus, exhaust duct assemblies 122 and 107 are removable from the basic spray booth. Exhaust duct assemblies 122 and 107 have lip portions 130 and 111 which act to align exhaust duct assemblies 122 and 107 and to provide removable surfaces at areas of accelerating air flow where residue accumulation is expected.

In the booth assembly, Figure 4A, provided with roof area 100, roof 100 is in intimate contact with gaseous materials forming the films on the underlying substrate. Thus, roof section 100 is removable from adjacent air slot 98. In a preferred embodiment, support member 101 slidably engages tracks 99 for maintaining the desired spacing forming air slot 98.

During operation of the spray line, booth 10 is supported on support blocks 38, as shown in Figure 1. The sides of the booth are sealed by foam silicone sheet backings on end plates 44 and support blocks 38.

To remove an exhaust entrance assembly 29, attachment means 43 is actuated to remove the weight of the booth from support blocks 38. Support blocks 38 are removed and exhaust entrance assembly 29 may be replaced with a cleaned assembly 29. Alternatively, the entire exhaust assembly 22 may be replaced with a cleaned assembly 22.

When roof section 32 is to be cleaned, end plate 44 is also removed. Roof section 32 can then be quickly replaced. When end plates 44 and support blocks 38 are removed, end pans 34 and 36 can be replaced.

A cover plate (not shown) may be used to cover substrate 50 when support blocks 38 and end plates 44 are removed. With a suitable cover plate installed, line operation could continue without debris falling onto substrate 50. The entire booth assembly 10 can then be removed for cleaning by removing exhaust ducts 22 and lifting booth 10 with support beam 42 from above a cover plate. Removal and replacement could also be affected without a cover plate, but the substrate sheets 50 exposed during the operations would possibly have defective films and/or substrate breakage.

It is thus apparent that the spray booth designs hereinabove described act to provide a controlled environment for controlling the characteristics of the sprayed material from the time the liquid is atomized at the air cap until residual spray and reaction by-products are removed by the exhaust system. A minimum volume spray booth minimizes stagnant areas where turbulence may be created; air injection is provided in an amount sufficient to suppress convection currents from above the heated glass substrate; and exhaust flow above the substrate surface is controlled as a function of the chemical reaction which occurs to form the desired film. Under these stable and predictable conditions, system operating parameters can be set to provide predictable film characteristics and qualities, obtaining superior films of $SnO_x$ having a high degree of optical clarity and high electrical conductivity and films of CdS having superior uniformity and freedom from surface anomalies.

It is also apparent that the present invention is one well adapted to attain all of the objects and advantages which will become obvious and inherent from a description of the apparatus itself. It will be understood that certain combinations and subcombinations are of utility and may be employed without reference to other features and subcombinations. This is contemplated by and is within the scope of the present invention.

Referring to Figure 6, there is depicted in schematic cross section a heated conveyor system suitable for forming high quality thin films in a spray deposition process. A typical heated conveyor section may contain a preheat zone 10' for establishing a substrate at a first selected temperature, a heated spray deposition zone 12' for maintaining the substrate temperature within a range of temperatures suitable for film formation, and a post heat section 14' for maintaining the substrate temperature to complete film formation and for cooling the hot substrate. Many configurations and combinations of the heat zones may be utilized in forming the various thin films of interest. For example, the substrate may be conveyed from one spray section to another spray section without the need for cooling the substrate to ambient conditions. In yet another example, a preheat and postheat section may be combined for the purpose of altering the characteristics of the spray deposited material.

A continuous conveyor system 16' is conveniently provided for supporting and aligning substrate materials for movement through the various heat zones. Conveyor belt 18' is initially supported and aligned by top belt drums 20' and 22' located at entrance and exit regions, respectively, of the selected combination of heat zones. Belt tensioning drum 21' is slidably supported beneath drum 20' for tensioning conveyor belt 18'. Tensioning may be provided by a simple lever system 26' where weights 28' are adjusted to maintain the desired tension in belt 18' for supporting the substrates. It is apparent that a variety of hydraulic and mechanical systems might be employed to tension belt 18', although the simple mechanical arrangement using lever arms 26' and weights 28' is presently used. Roll 21' is slidably and rotatably mounted on support 24' for tension adjustment.

Belt 18' takeoff drum 23' may conveniently be provided beneath drum 22' for supporting and aligning belt 18' for return to tensioning drum 21'. A suitable drive mechanism (not shown) may be connected to one of the drums for moving belt 18' in a continuous manner.

In functional terms, conveyor system 16' is selected to support a transparent vitreous substrate, such as glass, in a manner which permits uniform radiative heating of the substrate and without affecting the temperature of the substrate itself. Conveyor system 16' must also accommodate a variety of thermal expansion and contraction conditions as the belt traverses the various heat zones and must provide for maintaining substrate alignment and spacing conditions during the traverse. It is also desirable for belt 18' to retain the substrate material if breakage occurs during the film formation process.

Referring now to preheat zone 10', an insulated furnace is provided with removable top 30' and opposed heater sections 32' and 34'. Heater sections 32' and 34' provide a muffle furnace for rapidly heating an entering vitreous substrate. A vitreous material, such as glass, is capable of withstanding a very large temperature gradient in one dimension, but will break readily if a second orthogonal temperature gradient is introduced. Thus, heater sections 32' and 34' produce the requisite temperature uniformity across the substrate wherein a high rate of temperature increase can be obtained along the direction of substrate movement. Once the desired substrate temperature has been reached, a pre-spray heat zone 36' is provided for adjusting the substrate temperature just prior to a substrate entering the spray zones.

Spray control zone 12' is provided for controlling the radiant heat input during spray deposition and film formation. This section requires the greatest amount of power input and the closest control of energy input gradients to approximate the energy losses imposed by the spray and required for film formation.

For description purposes, two spray booths 48' are illustrated. A suitable spray booth may include spray area 50' providing a minimum volume for accepting the desired spray configuration, a film formation zone, such as beneath roof area 52', and exhaust system 54' for removing reaction products and undeposited sprayed materials. Suitable spray booth designs are disclosed in a patent application entitled "Improved Spray Methods and Apparatus", filed concurrently herewith, which disclosure is incorporated herein by reference.

Thus, a plurality of heater control zones are provided beneath spray booth 48' for approximating the thermal loss profiles. In one embodiment, there is provided a first entrance control zone 42', a spray zone control group 43', and an exit control group 44'. Each of the control groups is separately energized in response to the heat removal load imposed on the portion of the substrate above the particular control group.

Temperature control is attained by measuring the temperature of a selected heater element by thermocouples 38'. Thermocouples 38' are firmly affixed to their respective heater elements, preferably by welding. As hereinafter explained, a correlation may be established between the temperature of the heater element and the temperature of the substrate above a controlled heater group. The control function is obtained by a computer implemented duty cycle control system.

Control group isolation shields 40' are provided to ensure that a controlled group of heaters illuminates substantially only that portion of the substrate above the controlled heater group. If "cross-talk" were permitted between adjacent heater groups, it may be appreciated that a control thermocouple might be responding to substrate temperatures which are the result of heating by an adjacent control group. Control group isolation shields 40' prevent such "cross-talk" and permit a substrate surface area to be illuminated by one controlled heater group at a time. In addition to providing isolation for the heater control groups, the shields 40' also act to impede the flow of air through the heater region of the control zones. This impediment substantially eliminates exhaust induced and convection air currents which might act to carry spray materials beneath the substrate and which can create temperature maldistributions along the substrate.

Referring now to cooldown section 14', there is depicted a line section for returning the heated substrate to substantially ambient temperature. A heated section 46' is provided adjacent spray zone 12' for heating the substrate to complete the film-forming reaction and to maintain the substrate heated until the trailing edge is removed from the spray zone 12'. Cool-down section 14' then provides for gradually cooling the substrate.

Cooling exhaust ducts 60' are connected to an exhaust fan (not shown) which create airflow internal to cool-down section 14' and beneath insulated roof portion 56'.

This air flow enters through air filter $62'$ into cooling box $58'$. At the exit portion of the cool-down section $14'$, substantially all of the air flow is within cool down box $58'$ as the substrate nears ambient temperature.

Portions of the incoming airflow may be progressively diverted from the inside of cooling box 58 to the outside of cooling box $58'$. Alternatively, a single set of baffles $65'$ or $66'$ may be actuated and set near the surface of a substrate to induce airflow from above the surface to the area above cooling box $58'$. This diversion provides a stepped change in the substrate cooling mechanism from convective and conductive cooling at the substrate exit from cool-down section $14'$ to radiative cooling at the entrance to cool-down section $14'$. Thus, baffle pairs $64'$ and $65'$ divert a progressively larger portion of the airflow and baffle pair $66'$ thereafter diverts the remainder of the airflow to the exterior of cooling box $58'$.

As the substrate passes beyond postheat zone $46'$, heat energy is radiated from the substrate to the walls of cool down box $58'$ and removed from the walls by cooling air which has been diverted from the interior of cooling box $58'$. The heated exhaust air is removed through exhaust ducts $60'$. In the radiative cool-down zone, there is substantially no cooling air flow over the substrate.

As the substrate proceeds through cooling box 58' and beneath baffle pair 66', a small air flow is introduced to enhance cooling the substrate. Substantial radiative cooling continues to take place and air flow external to cooling box 58' removes heat from the heated sidewalls. Airflow over the heated substrate continues as the substrate proceeds until a substrate temperature is reached where the substrate can be removed to ambient conditions without breaking the substrate.

Referring now to Figure 7, there may be seen an isometric illustration showing component features of oven sections are provided with an insulated bottom portion 70' and a removable insulated top portion 68! Each of these sections are preferably stainless steel shells filled with high temperature insulation wherein exterior portions may be safely contacted. Portions of top section 68' may be cut-away for placing spray booths along the conveyor section.

Heater elements 88' are generally placed along bottom section 70' at selected intervals which can provide the desired thermal energy intensity. Typically, 0.625 inch diameter heaters are provided at 1.5 inch center-to-center spacings in the spray zones. Suitable heaters may provide up to 2.25 KW of heat energy per heater. In the muffle furnace zone, heaters are also provided in the top section 68' and heater spacings may vary.

As hereinabove noted, the substrate is to be heated uniformly in a direction transverse to movement of the substrate in order to produce only one dimensional temperature gradients. Uniform lateral heating is accomplished by extending the heaters to a width greater than the width of substrate 80'. Typically, the energy radiated to a given point on the substrate surface is a function of the included heater angle seen by that point on the substrate surface. The center of the substrate sees the largest included heater angle and an edge of the substrate sees the smallest included heater angle. If a 24 inch wide substrate 80' is spaced 2 inches above heater elements 88', it may be shown that an active heater length of 38 inches will produce about a 1% variation in received energy from the edge of substrate 80' to the center of substrate 80'.

In order to maintain temperature uniformity of the substrate and to account for the heat capacity of the conveyor belt support and guide system, it may be desirable to include trim heaters adjacent the interior walls of insulated section 70'. A trim heater includes active heating elements only adjacent the edge portions of the heater rod 88' and provides no heating elements in the central portion. Thus, additional thermal input is provided directly at areas having large heat capacities in order to improve the overall temperature distribution. Trim heaters are not necessarily required and will be a function of the overall heated conveyor system design.

As hereinabove noted, temperature control is based on the output of thermocouples $84'$ attached directly to heaters $88'$. A duty cycle control system, hereinafter described, regulates the power input to the heaters to maintain the heater temperature within selected limits. Control isolation shields $82'$ are provided to stabilize the relationship between the control signals to heaters 88 and the temperature of an overlying substrate. Without isolation shields $82'$, a substrate would receive radiative heat from a plurality of heater control groups and a correlation would have to be established between all of the control groups. Such correlation is very difficult to attain and even more difficult to maintain. With the isolation shields $82'$, however, a substrate surface "sees" only the radiative heat from a small control group of heaters $88'$.

Calibration thermocouple $86'$ may conveniently be provided for calibrating the duty cycle settings as a function of thermocouple 84 outputs. Calibration thermocouple $86'$ may be inserted from the bottom of the heated conveyor section, preferably adjacent a control thermocouple $84'$ wherein the thermocouple $86'$ is vertically located between thermocouples $84'$ and belt $76'$. Then, the temperature of an overlying substrate can be extrapolated from the temperature readings produced by thermocouples $84'$ and $86'$. For accurate set point control, an actual relationship may be experimentally determined and stored in a suitable electronic memory medium. Alternatively, a mathematical expression could be derived to approximate the experimental relationship and the appropriate constants in the equation stored for future computations. Subsequent calibration of the heater control system could then be obtained by inserting a calibration thermocouple and adjusting the duty cycle until the outputs from thermocouples $84'$ and $86'$ satisfy the stored relationships required to provide the desired substrate temperature.

Still referring to Figure 7 , a belt conveyor is provided for moving substrate $80'$ along the heated conveyor. Substrate $80'$ is typically a transparent vitreous substrate, such as glass, capable of withstanding severe one dimensional temperature gradients, but readily breakable under the influence of two dimensional temperature gradients. Hence uniform heating of substrate $80'$ in at least one direction is required. Further, a high quality thin film will be formed on the surface of substrate $80'$ opposing the radiated surface of substrate $80'$. A selected solution will be sprayed onto the film-forming surface and an appropriate chemical reaction will occur driven by heat input from the surface. The characteristics of the film are functionally related to the temperature of the film-forming substrate so that forming a uniform film requires a high degree of temperature uniformity on the film-forming surface.

The continuous belt conveyor system depicted in Figure 7 includes specific features for promoting temperature uniformity. Belt 76' is preferably a wire mesh supported at appropriate points by support bars 78'. Support bars 78', in turn, are supported by bottom heater section 70'. In one embodiment, a continuous chain 74' is provided which rides in chain guide 72' along heater section 70'. A wire mesh is selected for belt 76' which promotes uniform irradiation of the irradiated surface of substrate 80'. A desirable mesh size is one which transmits the maximum incident radiation onto the substrate surface but is sufficiently tight that fragments from broken substrates are retained. A number 10 mesh size has been found suitable for this purpose. Further, it will be appreciated that belt 76' does not form a planar surface between supports 78' but, rather, sags between supports. Thus, substrate 80' is supported only along the leading and trailing edge wherein the wire mesh does not shadow the glass or introduce temperature non-uniformities. However, this sag is controlled to ensure that unacceptable deformation of the substrate does not occur during the elevated temperatures required for certain film forming operations.

The side support members and conveying mechanisms, which may be conveyor chain 74' and chain guide 72', are spaced apart from substrate 80'. This minimizes the temperature perturbations along the outside edges of substrate 80' which might be affected by an adjacent metallic mass. Further, support members 78' are desirably formed to minimize the metallic mass adjacent the leading and trailing edges of substrate 80'. Although not shown in Figure 2', side shields may be used to overlay the portions of mesh 76' between the sides of substrate 80' and the sidewalls of heater section 70'. Such shields minimize convection currents about the edges of substrate 80' and, in spray sections, prevent incident spray from passing into the underlying heater section.

To further promote uniform film formation, support bars 78' are formed in parallel relationship with one another and are spaced apart to minimize the gap remaining between substrate 80' and spacer bars 78'. It has been found that the exhaust systems in the spray booths 48' (see Figure 1') can induce airflow from beneath substrate 80' around the edges. The strength of this airflow is functionally related to the gap between substrate 80' and between the side shields (not shown) and spacer bars 78'. The side shields (not shown) are stationary and relatively close tolerances can be maintained.

However, spacer bars 78' are subject to the full range of temperature variations within the heated conveyor system and are further subject to stresses induced in passing the conveyor system over end rollers, as hereinafter described.

A chain mechanism is depicted in Figure 7 for supporting and conveying belt 76'. Chain 74' in turn, is supported by chain guide 72' during movement through the conveyor section. A variety of support and conveying systems may be designed, but the preferred chain system offers several desirable functional characteristics: only minimal lubrication is required since rotational parts are not used, parallel tracking of support bars 78' is obtained, and a chain conveniently meshes with a conventional sprocket drive system.

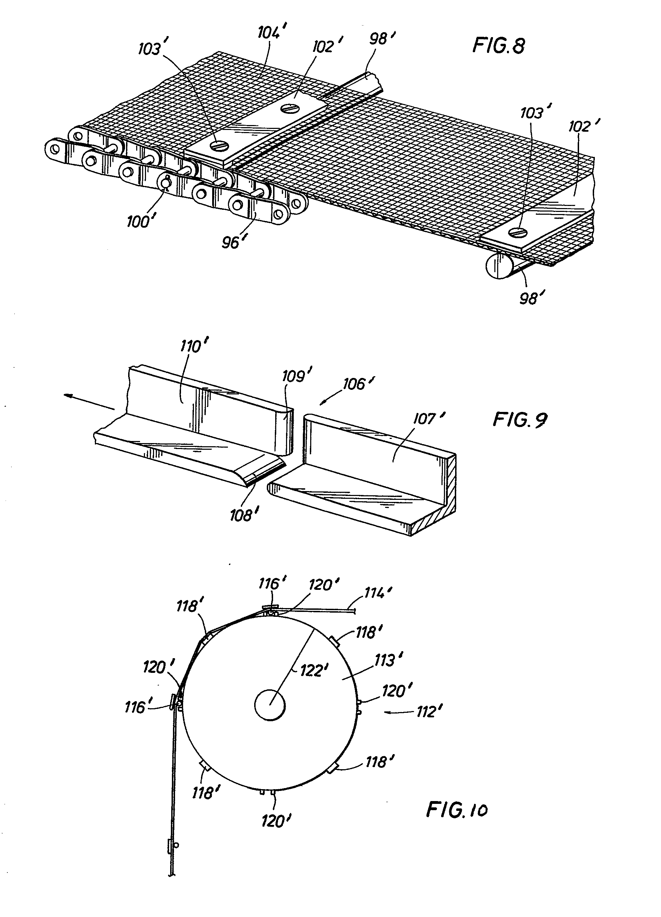

Referring now to Figure 8 there is more particularly depicted a preferred embodiment of the conveyor belt system. Wire mesh 104' is supported by support bar 98'. Spacer bars 102' are provided to clamp mesh 104' to support bar 98' and are mounted thereto with fasteners 103'. Spacer bar 102' is sized to accept the selected substrate dimension to preferably maintain a gap between an edge of spacer bar 102' and a facing edge of the adjacent substrate to about 0.125 inch (.32 cm). A gap larger than the desired maximum permits sufficient airflow between the substrate and spacer bar 102'which can lift the chemical reaction from surface portions of the substrate adjacent the gap.

Support bar 98'is connected to chain 96'and may form one of the pin members interconnecting the chain links in chain 96'. Chain 96'is preferably a pintle chain having links of a malleable material, such as cast iron, for high temperature operation without lubrication. Support bar 98' is removably connected with chain 96', which may be accomplished using cotter pin 100'on one side and a press fit pin on the opposite side to preclude rotation of support bar 98'.

Referring now to Figure 9 chain guide assembly 106'is depicted, showing exit and entrance portions of the chain guide sections. Chain movement is generally in the direction indicated by the arrow, leaving one section at chain guide exit portion 107'. Chain guide entrance portion 110'is formed to accept the chain links and promote free movement of the chain in the transition from one guide portion 107'to another guide portion 110'. Thus, the walls of entrance portion 110'are separated to form a funnel shaped configuration having beveled edges 108'and 109'. The chain links will thus transition smoothly from one section to another and no sharp edges are permitted which could interfere with chain movement.

Referring now to Figure 10 there is shown a schematic cross section of a roller drum for moving conveyor belt assembly 114' in a continuous path. As hereinabove discussed, support members 116' are subject to stress-induced bowing which may be caused by movement of the conveyor system about support drum 113'. As hereinabove noted, conveyor assembly 114' is supported by a chain member which engages sprocket means (not shown) located about the periphery of roller drum 113'. The center of support bar 116' defines the radius 122' through which the chain rotates. It will be appreciated that belt 114' is supported on the top portion of support bar 116' and is initially at a larger radial location than the radius 122' of support bar 116'. If this radial differential is not corrected, differential movement will occur between the mesh portion of belt assembly 114' and support bar 116', which is manifested in bowing of support bars 116'. This bowing produces unacceptable gaps between the substrate members and the spacer bars affixed to support bars 116'.

Thus, it is very desirable that the travel distance of belt 114' and the centerline of support bar 116' be equalized. As shown in Figure 4', this is accomplished by maintaining the radius of roller drum 113' less than radius 122' of support bar 116'. Support bar 116' is engaged by alignment bars 122' as the conveyor belt leaves the oven sections. Alignment bars 120' are spaced about the periphery of roller drum 113' so that each support bar 116' is accepted within a pair of alignment bars 120'.

As shown in Figure 10 belt 114' does not conform to the periphery of drum 113', but rather attempts to connect adjacent alignment bars 120' in a straight line interrupted only by intermediate contact with drum 113'. Thus, the distance of belt 114' from the center of roller drum 113' will vary as the belt assembly is rotated from a radius greater than radius 122' to the radius of drum 113', which has been selected to be less than radius 122'. Shims 118' may be provided to adjust the effective radius of belt 114' until the distance which belt 114' travels in passing over the conveyor rolls 113' is matched to the distance which the center line of support bar 116' travels. In this manner, differential travel is eliminated and there is no resulting stress-induced bowing of support bars 116'. It is to be expected that other designs exist which equalize the distance traveled by the component members of the conveyor system in passing about support drum assembly 112', and only the preferred embodiment is hereinabove described.

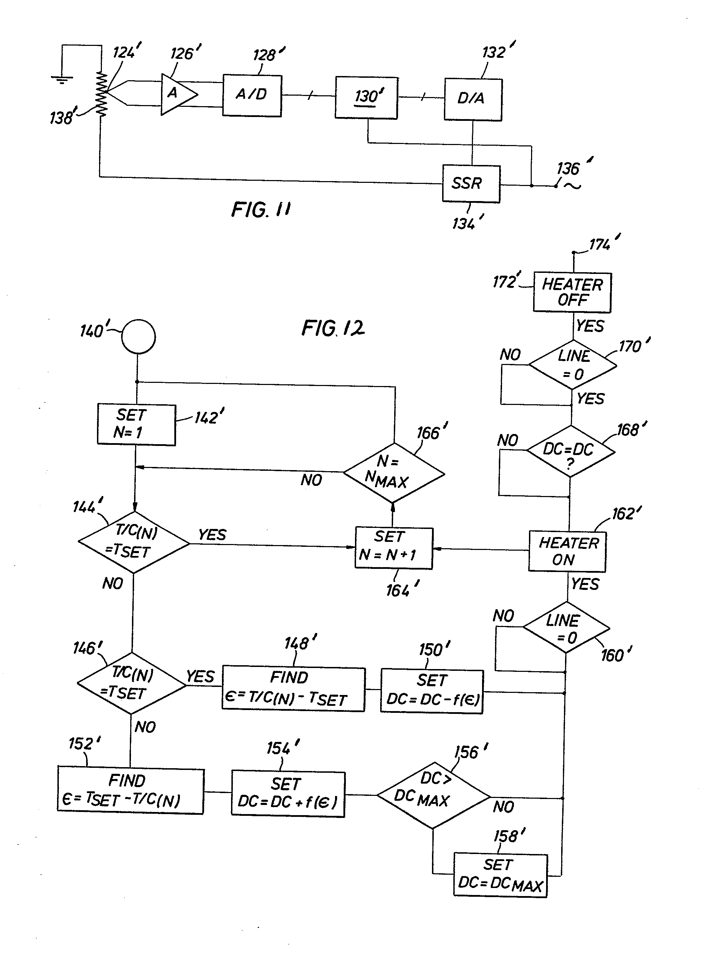

In Figure 11 there is depicted, in block diagram form, a control system for energizing the heater control groups hereinabove discussed. Thermocouple 124' is firmly affixed to the surface of heater element 138' at a selected location within a control group. The output from thermocouple 124' is functionally related to the temperature of radiant heater element 138' which, in turn, is determined by the temperature of the substrate above the heater, based on fundamental radiant heat transfer theory. This output from thermocouple 124' is amplified by preamplifier 126' and converted to a digital output by analog-to-digital converter 128! The digital signal is inputted to computer 130' for use in driving a control signal, as hereinafter discussed. Another input signal to computer 130' may be line signal 136' where it is desired to perform switching functions associated with heater control at certain values of the line signal 136!

The output control signal, which contains information related to energizing heater elements 138' and the time such control will be exercised, is provided to digital-to-analog converter 132! where an analog signal is outputted to control solid state relay 134! Solid state relay 134' is connected to power signal 136' and connects power signal 136' with heater element 138' as a function of the analog signal from converter 132! The basic components of the control system depicted in Figure 11 are generally well known in the prior art.

Referring now to Figure 12 there is depicted a computing flow diagram suitable for deriving a control signal for application to solid state relay 134' (see Figure 11).

Once the system is initialized 140', a closed loop operation is carried out where each of the thermocouples is interrogated in turn and a corresponding duty cycle computed for the heater elements associated with that thermocouple. Since the system heat capacities provide relatively slow response, a real time operation may be carried out.

A first thermocouple is selected 142' and the thermocouple output reading is compared 144' with its set point value. If the thermocouple output is equal to the set point value, then the thermocouple selection is incremented 164'. It is then determined 166' whether the last thermocouple has been interrogated. If so, the system is reset 142' to interrogate the first thermocouple again. If not, the next thermocouple output is compared 144' with its set point.

If the thermocouple output does not equal the set point value, a comparison 146' is made to determine whether the thermocouple output is greater or less than the set point. Where the thermocouple output is greater than the set point, an error signal is generated 148' which is related to the magnitude of the difference between the thermocouple output and the set point. A duty cycle is selected 150' which is reduced from the previous duty cycle by a factor which is related to the magnitude of the difference determined at 148'. This provides a proportional-type control system which can minimize or eliminate system overshoot about the set point.

Where the thermocouple output is less than the temperature set point, an error signal is derived 152$^/$which is the magnitude of the different between the set point and the thermocouple output signal. The duty cycle is now adjusted 154$^/$upward by increasing the previous duty cycle an amount related to the error signal computed at 152$^/$ In this instance, it is desired to maintain the maximum duty cycle below a preselected maximum in order to reduce power surges and also to maintain the rate of heat input to the substrate at acceptable levels. Thus, the derived duty cycle is compared 156$^/$ with the selected maximum duty cycle. If the duty cycle is below the acceptable maximum, then the computed duty cycle is used. If the computed duty cycle is greater than the preselected maximum signal, then the duty cycle is set 158$^/$ at the selected maximum duty cycle.

Once the operating routine has determined the duty cycle to be used in activating the heater elements, it may be desirable to monitor the line signal and switch the elements on or off as the line signal passes through a zero value. Thus, as shown in Figure 12$^/$ the routine monitors line voltage to determine if the line is zero 160$^/$ When that condition occurs, the heater element is turned on 162$^/$ When the heater element is turned on, the main operating routine returns to increment 164$^/$the thermocouple selection and repeat the determination.

In a sub-routine, the heater-on time is monitored 168' until the duty cycle is reached, whereupon the line condition is again monitored 170' and the heater turned off 172' when a zero line condition occurs. The sub-routine completes 174' and awaits another duty cycle command to activate a heater.

It should be recognized that a variety of control schemes may be used to activate the heaters in a manner effective to maintain the overlying glass substrate at a preselected temperature. This control scheme is not part of the present invention, but is presented herein to complete the description of the system operation.

Thus, an improved heated conveyor system is provided wherein sheets of substrate may be heated, subjected to a film-forming spray deposition, and cooled to room temperature on a continuous basis. A conveyor system is provided wherein the substrate materials may be heated by radiative heaters below the substrate while a spray system is depositing film-forming materials above the substrate. The conveyor is designed to maintain only minimum gaps between the substrate and surrounding conveyor supports so that airflow effects will not significantly effect film-forming operations on the substrate surface.

Further, accurate temperature control is maintained by illuminating surfaces of the substrate only through heater groups which irradiate immediately adjacent portions of the substrate so that feedback does not occur between adjacent control heater groups. A temperature control scheme is provided for calibrating the thermocouples relative to the temperature of the glass substrate and for activating the heaters on a duty cycle control, where uniform heating of the substrate occurs.

It is apparent that the present invention is one well adapted to attain all of the objects and advantages which will become obvious and inherent from a description of the apparatus itself. It will also be understood that certain combinations and subcombinations are of utility and may be employed without reference to other features and subcombinations.

The main features of the preferred embodiments of the invention described above can be summarized as follows:

An improved spray booth is provided for use in forming high quality thin films by controlling the spray parameters related to film formation. A spray nozzle design is selected which permits control of the spray footprint on a heated substrate. A projected atomized liquid is formed to the selected spray configuration by directing spray cones of air toward the atomized liquid. Dwell time of the spray material adjacent the hot substrate is then controlled by controlling the velocity of airflow within the spray chamber and adjacent the substrate. To promote a gas phase reaction, a roof section is provided with reduced airflow wherein sufficient dwell time is provided for the vapor reaction to occur. Where a liquid phase reaction is provided, high velocity airflow is maintained to promptly remove reaction products and spray material which has not reached the surface after a selected time period. The spray booth is designed for frequent cleaning by providing separately removable sections where the frequency of cleaning may be varied as a function of the accumulated condensate. Thus, regions of the spray booth in contact with the sprayed solution may be removed without removing the entire spray booth. Particular uses employing the particular design principles include application of a film of $SnO_x$ which is highly transparent and electrically conductive and thin films of CdS suitable for use in forming large area photovoltaic panels.

An improved conveyor assembly is provided for transporting a transparent vitreous substrate along a group of controlled radiative heaters. A plurality of control groups are formed from the radiative heaters and the illumination for the various control groups is isolated so that areas of the conveyor or substrate are illuminated by only a single control group at any one time. Heater control thermocouples are affixed to the radiative heater elements and the output signals from the control thermocouples are calibrated from a calibration thermocouple extending to a position between the control thermocouple and the substrate surface. A wire mesh belt assembly permits illumination of the substrate through the conveyor assembly while supporting the substrate in a manner effective to obtain uniform heating of the substrate. A chain-type system is used for moving the supports of the wire mesh belt and end drum portions of the conveyor are configured to accommodate any difference in radius of travel between the mesh belt and the support bars as the assembly rotates about the end drums.

0083383

- 1-

<u>CLAIMS</u>:

1.     Apparatus for forming thin films of selected materials on a hot moving substrate; comprising:

a spray nozzle adapted for forming a selected spray configuration;

a spray chamber having a minimum volume defined by an interior wall configuration for reducing turbulence within said spray chamber;

means for introducing atmospheric flow through said spray chamber in an amount effective to suppress convection currents above said hot substrate; and

exhaust ducting extending transverse to movement of said substrate for receiving said atmospheric flow.

2.     Apparatus as described in Claim 1, wherein said spray nozzle further includes an air cap having a central opening for atomizing a selected liquid and at least two side openings for injecting air in a pattern effective to form said selected spray configuration.

3.     Apparatus as described in Claim 1, further including:

an intermediate slot defined by said spray chamber interior wall for exhausting a portion of said atmospheric flow at an elevation remote from said substrate and controlling the velocity of said atmospheric flow over said substrate.

4.    Apparatus as described in Claim 3, wherein said spray chamber further defines a roof section formed at an elevation above said substrate in cooperative relationship with said intermediate slot to maintain said atmospheric flow within a selected velocity range over said substrate.

5.    Apparatus as described in Claim 4, wherein said selected velocity range provides a dwell time beneath said roof section for a film forming reaction of sprayed solutions to occur.

6.    Apparatus as described in Claim 4, wherein said exhaust ducting includes:

a first removable lip portion adjacent said substrate for directing flow from above said substrate into a vertical portion of said exhaust ducting;

said vertical portion being removably connected with said first lip portion and further including a second lip portion cooperating with said first lip to define an entrance to said exhaust ducting.

7.    Apparatus as described in Claim 6, wherein said intermediate slot intersects said vertical portion at a location effective to cool materials received from beneath said roof section and condense said materials on said removable lip portion.

0083383

- 3 -

8. Apparatus as defined in Claim 1, wherein said interior wall configuration of said spray chamber substantially conforms to said selected spray configuration.

9. Apparatus as described in Claim 1, further including:

a conveyor belt assembly for supporting said hot moving substrate in a manner effective to obtain uniform heating of said substrate through said conveyor belt;

a plurality of radiative heaters interconnected to form a plurality of heater control groups; and

radiation shields placed between adjacent heater control groups and extending from the elevation of said heaters to an elevation adjacent said conveyor assembly effective to substantially confine radiant heating from said control group to a facing area of said substrate.

10. Apparatus as described in Claim 9, further including:

at least one control thermocouple affixed to a radiative heater in a control group for providing output signals functionally related to a temperature of said substrate; and

calibration thermocouple means extending to an elevation between said control thermocouple and said conveyor and producing an output signal for deriving said functional relationship between said control thermocouple signal and said substrate temperature.

11.    Apparatus as described in Claim 9, wherein said conveyor belt assembly further includes:

wire mesh for supporting said substrate;

substantially rigid supports extending across said wire mesh and supporting said mesh at locations effective for accepting preselected lengths of said substrate; and

said wire mesh contacting said substrate along leading and trailing edge portions within a preselected range of elevations above said heaters.

12.    Apparatus as described in Claim 11, further including:

spacer strips attached to said rigid supports for substantially filling the space between a trailing edge of one substrate and a leading edge of a following substrate.

13.    Apparatus as described in Claim 11, further including:

means for equalizing the travel distance of said rigid supports and said wire mesh to maintain said rigid supports in substantially parallel alignment.

14.    Apparatus as described in Claim 13, wherein said travel equalizing means includes:

at least one end drum for reversing the direction of said wire mesh; and

shim means on said end drum effective to substantially equalize the effective radius of travel for said rigid supports and said wire mesh around said end drum.

15.    Apparatus as described in Claim 9, further including:

trim heaters located with said control groups and activated in a manner effective to reduce temperature gradients at edge portions of said conveyor belt assembly.

16.    A process for forming thin films of selected materials on a hot moving substrate, comprising the steps of:

forming from an atomized liquid a selected spray configuration;

projecting said spray vertically toward said hot substrate within a spray chamber having a minimum volume for reducing turbulence;

introducing ambient air flow about said spray to suppress convection air currents arising from said substrate; and

exhausting materials resulting from said spray from above said substrate.

17. A process according to Claim 16, wherein forming said spray configuration further includes the step of:

projecting at least two streams of a gas at an angle effective to intercept said atomized liquid and form said selected configuration.

18. A process according to Claim 17, wherein said gas projection angle cooperates with said atomized liquid to confine movement of said atomized liquid to directions generally parallel with movement of said substrate.

19. A process according to Claim 17, wherein said gas projection angle cooperates with said atomized liquid to form a fan shaped configuration having a longitudinal axis substantially parallel with movement of said substrate.

20. A process according to Claim 16, further including the step of controlling the dwell time of said spray above said substrate.

21. A process according to Claim 20, wherein controlling said dwell time includes:

removing a first portion of said ambient air flow at a location along said spray chamber wall;

a second portion of said ambient air flow cooperating with the spray chamber volume between said substrate and said spray chamber wall contour to obtain said dwell time.

22. A process according to Claim 21, further including the step of:

recombining said first and second air flow portions to condense materials in said second portions on a selected surface.

23. A process according to Claim 16, further comprising the steps of:

conveying said substrates along a plurality of radiative heaters;

energizing said radiative heaters in controlled groups;

illuminating a point on a surface of said substrate with said radiative heaters in a first controlled heater group during a first time interval; and

shielding said point on said surface of said substrate from radiative heat from other of said controlled heater groups during said first time interval.

24. A process according to Claim 23, further including the steps of:

detecting the temperature of a radiative heater within each one of said control groups; and

energizing said heaters responsive to said detected temperature.

25. A process according to Claim 23, wherein conveying said substrate further includes the steps of:

supporting each of said substrates on said conveyor substantially along leading and trailing edge portions of said substrates; and

illuminating said substrate through said conveyor.

26. A process according to Claim 25, wherein supporting said substrates further includes the steps of:

contacting said leading and trailing edge portions of said substrates with mesh belt portions of said conveyor; and

supporting said mesh belt with support bars at intervals spaced apart a distance greater than the length of said substrates.

FIG. 1

FIG. 2

FIG. 3

FIG.4B

FIG.4A

18

18

124

124

84

76

92

A

E

105

106

108

94

96

107

122

B

98

99

113

127

109

129

110

F

C

101

D

128

111

100 130 114

102

FIG.5B

FIG.5A

85 84

76 78

86

80

88 81

81 82

Ø

θ

FIG. 6

FIG. 7

FIG.8

103' 104' 102' 98'

103' 102'

100' 96'

98'

FIG.9

110' 109' 106'

107'

108'

FIG.10

116' 120' 114'

118'

118'

120' 122' 113'

116' 120'

112'

118'

118'

118'

120'

0083383

FIG. 11

138' 124' 126' A 128' A/D 130' 132' D/A

SSR 134' 136' ~

FIG. 12

140'

SET N=1 142'

144' T/C(N) =TSET

146' T/C(N) =TSET

152' FIND ε= TSET - T/C(N)

154' SET DC=DC +f(ε)

156' DC> DC MAX

158' SET DC=DC MAX

148' FIND ε= T/C(N) - TSET

150' SET DC=DC - f(ε)

160' LINE =0

162' HEATER ON

164' SET N = N+1

166' N = NMAX

168' DC=DC ?

170' LINE =0

172' HEATER OFF 174'

**European Patent Office**

## EUROPEAN SEARCH REPORT

Application number

EP 81306199.1

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | GB - A - 1 505 464 (CENTRAL GLASS)<br>* Page 2, line 67 - page 3, line 122; fig. 1 * | 1,3-8, 16 | B 05 C 15/00<br>B 05 B 13/04<br>B 05 B 12/00<br>B 05 D 1/02//<br>C 03 C 17/22<br>C 03 C 17/245 |
| D,A | US - A - 4 224 355 (PHOTON POWER)<br>* Column 5, line 24 - column 8, line 23; column 9, line 13 - column 11, line 27 * | 9-11, 16,23- 24 | |

**TECHNICAL FIELDS SEARCHED (Int.Cl. 3)**

B 05 C

B 05 B

C 03 C

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | | |
|---|---|---|---|
| X | | | |
| Place of search | Date of completion of the search | Examiner | |
| VIENNA | 02-09-1982 | KAHOVEC | |

EPO Form 1503.1 06.78